# EUROPÄISCHE PATENTANMELDUNG

(11) **EP 3 851 626 A1**
(43) Veröffentlichungstag der Anmeldung: **21.07.2021**
(21) Anmeldenummer: 20152099.6
(22) Anmeldetag: 16.01.2020
(51) Int. Cl.: E06B 3/673, B29C 48/345, B29C 48/18, B29C 48/25, B29C 48/30

(54) **EXTRUSIONSDÜSE, VERFAHREN ZUR EXTRUSION UND VERWENDUNG DER EXTRUSIONSDÜSE**

(71) Anmelder: SAINT-GOBAIN GLASS FRANCE, 92400 Courbevoie (FR)
(72) Erfinder: GERADS, Manfred, 52511 Geilenkirchen (DE); OLTROGGE, Jan-Uwe, 52066 Aachen (DE); KLEYER, Dieter, 52146 Würselen (DE); MOTZHEIM, Ralf, 52223 Stolberg (DE)
(74) Vertreter: Koenigs, Dana Anniela

(57) **Zusammenfassung**

Die Erfindung betrifft eine Extrusionsdüse (2) zur Ausbringung eines Profilstranges, umfassend:
a. Einen Extrusionsdüsenkörper (4) mit einem Extrusionsdüsenkopf (6), wobei der Extrusionsdüsenkörper (4) auf einer ersten Seite zum Verbinden mit einem Verbindungselement (22) ausgelegt ist und auf einer zweiten Seite den Extrusionsdüsenkopf (6) aufweist,
b. Zumindest zwei Extrusionsdüsenöffnungen (8), welche auf einer Oberseite (10) des Extrusionsdüsenkopfes (6) angeordnet sind, und
c. Ein Verteilerelement (12), welches am Extrusionsdüsenkopf (6) angeordnet ist.

Weiterhin betrifft die Erfindung ein Verfahren zur kontinuierlich Extrusion eines Profilstrangs, und die Verwendung der Extrusionsdüse.

## Beschreibung

Die Erfindung betrifft eine Extrusionsdüse, ein Verfahren zur Extrusion und die Verwendung der Extrusionsdüse.

Bei der Herstellung von Verglasungen mit mehreren Scheiben, insbesondere Bauglasscheiben, welche mindestens eine Doppelverglasung umfassen, werden Glasscheiben zunächst mit einem Abstandshalter gefügt. Der Abstandshalter wird nicht direkt an der Kante der Glasscheiben, sondern in einem Abstand zur Kante der Glasscheiben aufgebracht, so dass zwischen den Glasscheiben, begrenzt durch den Abstandshalter, eine Kavität entsteht, die durch einen Klebstoff bzw. ein Polymer als Profilstrang gefüllt wird. Im Bereich der Kanten der Glasscheiben kann der eingefüllte Profilstrang mittels eines Gleitschuhs so abgedichtet werden, dass ein Austreten von Material verhindert wird. Prozesstechnisch kommt es jedoch an den Glasscheibenecken zu einem Überquellen des Materials, so dass diese Bereiche im Nachhinein manuell nachbearbeitet werden müssen.

Nach dem Stand der Technik sind verschiedene Extrusionsdüsen insbesondere auch für unterschiedliche Einsatzzwecke bekannt. So ist aus der WO2013/091988 A1 eine Extrusionsdüse zur Extrusion eines variablen Profilstranges bekannt. Die bekannte Extrusionsdüse umfasst einen Extrusionsdüsenkörper, der sich entlang einer Erstreckungsrichtung erstreckt, eine Düsenöffnung in dem Extrusionsdüsenkörper und einen Schieber zum Regulieren einer Höhe des Profilstranges. Eine solche Extrusionsdüse weist eine vergleichsweise hohe Komplexität auf.

DE 42 32 554 C1 offenbart ein Verfahren zur Herstellung einer mit einem angeformten Rahmen aus einem thermoplastischen Polymer versehenen Glasscheibe und eine entsprechende Vorrichtung. Die zu bearbeitende Glasscheibe wird dazu vor der eigentlichen Extrusion auf ein beheiztes Formbett abgelegt, welches die Glasscheibenränder überragt. Der erzeugte Profilstrang überragt die Glasscheibe entsprechend dem Formbett. Dazu kann eine Düse mit einem abgewinkelten Düsenansatz verwendet werden, welche in den Spalt zwischen der Glasscheibe und einer Formfläche der Oberfläche eingreift.

DE 39 30 414 A1 offenbart eine Glasscheibe mit profiliertem Rahmen, welcher durch Extrusion und Aushärten auf der Scheibe hergestellt wird.

Aufgabe der Erfindung ist es eine verbesserte Extrusionsdüse anzugeben, weiterhin soll ein Verfahren zur Extrusion und eine Verwendung der Extrusionsdüse angegeben werden.

Die Aufgabe der Erfindung wird hinsichtlich der Extrusionsdüse durch die Merkmale des Anspruchs 1, hinsichtlich des Verfahrens durch die Merkmale des Anspruchs 10 und hinsichtlich der Verwendung der Extrusionsdüse durch die Merkmale des Anspruchs 11 gelöst. Zweckmäßige Ausgestaltungen ergeben sich durch die jeweiligen Unteransprüche.

Die erfindungsgemäße Extrusionsdüse zur Ausbringung eines Profilstranges, umfasst einen Extrusionsdüsenkörper mit einem Extrusionsdüsenkopf, wobei der Extrusionsdüsenkörper auf einer ersten Seite zum Verbinden mit einem Verbindungselement ausgelegt ist und auf einer zweiten Seite den Extrusionsdüsenkopf aufweist. Auf einer Oberseite des Extrusionsdüsenkopfes sind zumindest zwei Extrusionsdüsenöffnungen angeordnet. Weiterhin umfasst die Extrusionsdüse ein Verteilerelement, welches an dem Extrusionsdüsenkopf angeordnet ist.

Der Vorteil der erfindungsgemäßen Düse ist eine verbesserte Verteilung des aufgetragenen Materials.

Die zumindest zwei Extrusionsdüsenöffnungen sind beide auf der Oberseite des Extrusionsdüsenkopfes angeordnet. Die zumindest zwei Extrusionsdüsenöffnungen können in einer Vorschubrichtung der Extrusionsdüse nebeneinander oder hintereinander angeordnet sein.

Extrusionsdüse, Extrusionsdüsenkopf und/oder Verteilerelement sind insbesondere einstückig ausgebildet oder fest miteinander verbindbar.

Der Extrusionsdüsenkopf hat zweckmäßigerweise eine Oberseite, welche zumindest eine obere Fläche umfasst. Von dieser oberen Fläche erstecken sich zwei Seitenflächen, welche sich im Wesentlichen parallel zur Vorschubrichtung erstrecken und eine hintere Fläche, welche im Wesentlichen senkrecht zu den Seitenflächen ausgebildet ist. Der Abstand der beiden Seitenflächen zueinander bildet eine Breite des Extrusionsdüsenkopfes, der zur Extrusion in einen Spalt z.B. zwischen zwei Glasscheiben geringfügig schmaler als eine Spaltbreite gewählt ist.

Die Extrusionsdüsenöffnungen haben zweckmäßigerweise eine quadratische oder rechteckige Öffnungsfläche.

Der Extrusionsdüsenkörper kann auch fest mit dem Verbindungselement verbunden sein oder einstückig damit ausgelegt sein.

In einer Ausgestaltung weist der Extrusionsdüsenkörper eine gebogene oder gekröpfte Form auf. Unter gekröpfte Form soll eine Form verstanden werden, die nach einem zum Verbindungselement gerichteten Bereich im Wesentlichen eine dazu senkrecht stehende U-Form aufweist, wobei die Schenkel des U's unterschiedlich lang oder gleich lang ausgebildet sein können. In dieser Ausgestaltung ist die Extrusionsdüse geeignet mit dem Extrusionsdüsenkopf in einen Spalt zwischen zwei Glasplatten eingeführt zu werden, um dort die Extrusion durchzuführen.

In weiterer Ausgestaltung weist die Extrusionsdüse zumindest drei Extrusionsdüsenöffnungen auf, wobei die Extrusionsdüsenöffnungen insbesondere in einer Reihe angeordnet sind. Zweckmäßigerweise sind genau drei Extrusionsdüsenöffnungen in einer Reihe angeordnet, welche sich senkrecht zur Vorschubrichtung erstreckt. Ein Öffnungsquerschnitt der äußeren Extrusionsdüsenöffnungen ist zweckmäßigerweise kleiner als ein Öffnungsquerschnitt der dazwischenliegenden Extrusionsdüsenöffnungen. Somit ist bei drei Extrusionsdüsenöffnungen insbesondere die mittlere Extrusionsdüsenöffnung größer als die beiden äußeren Extrusionsdüsenöffnungen. Das Verhältnis der Öffnungsflächen kann 1:1 bis 3:1, bevorzugt 2:1 zwischen mittlerer Extrusionsdüsenöffnungsfläche und äußerer Extrusionsdüsenöffnungsfläche betragen.

Bei einer größeren Anzahl von Extrusionsdüsenöffnungen können die Extrusionsdüsenöffnungen auch in zwei hintereinander angeordneten Reihen, welche sich senkrecht zur Vorschubrichtung erstrecken, angeordnet sein.

In einer Ausgestaltung ist das Verteilerelement am Extrusionsdüsenkopf in einer Vorschubrichtung angeordnet und verjüngt sich in der Vorschubrichtung. Das Verteilerelement weist insbesondere eine Oberfläche auf, die mit der Oberfläche des Extrusionsdüsenkopfes verbunden ist. Die Oberfläche des Verteilerelements und die Verteilerfläche des Extrusionsdüsenkopfes weisen allerdings zweckmäßigerweise einen Winkel α auf. Dieser Winkel α liegt in einer Ebene, die von der Vorschubrichtung und der Oberflächennormale der Oberseite des Extrusionsdüsenkopfes, bzw. bei nicht ebener Oberfläche auf der Oberseite des Extrusionsdüsenkopfes einer Normalen der Schnittebene, die die oberen Kanten der Seitenflächen umfasst, gebildet wird. Der Winkel α liegt bevorzugt zwischen 15° und 30°, insbesondere zwischen 20° bis 25°, bevorzugt ist der Winkel α 22,5°. Das Verteilerelement ist insbesondere geeignet Extrusionsmaterial vor der Düse herzuschieben.

In einer Ausgestaltung weist der Extrusionsdüsenkopf auf zwei sich gegenüberliegenden Seiten eine Einbuchtung auf, welche insbesondere in einem in Vorschubrichtung hinteren Bereich des Extrusionsdüsenkopfes angeordnet sind. Diese Einbuchtungen sind zweckmäßigerweise in einem oberen hinteren Bereich der Seitenflächen des Extrusionsdüsenkopfes angeordnet. Diese Einbuchtungen dienen als Materialreservoirs und kann somit überschüssiges Extrusionsmaterial aufnehmen.

In weiterer Ausgestaltung ist eine Oberfläche der Oberseite des Extrusionsdüsenkopfes eben, konkav gewölbt, konvex gewölbt oder dachförmig ausgebildet.

In einer Ausgestaltung weist der Extrusionsdüsenkörper eine mit der Anzahl der Extrusionsdüsenöffnungen identische Anzahl von separaten Kanälen auf, wobei insbesondere die Kanäle auf der ersten Seite des Extrusionsdüsenkörpers den Querschnitt eines Kreissegments aufweisen und sich der Querschnitt entlang des Extrusionsdüsenkörpers zur Querschnittsfläche der Extrusionsdüsenöffnung ändert. So kann die Extrusionsdüse beispielweise drei Extrusionsdüsenöffnungen aufweisen. In diesem Fall hat die Extrusionsdüse dann zweckmäßigerweise drei Kanäle, welche voneinander getrennt durch den Extrusionsdüsenkörper verlaufen. Die Form der Kanäle ändert sich von einer Eingangsform am Einlass der Kanäle hin zur Form der Extrusionsdüsenöffnungen.

Zweckmäßigerweise ist die Extrusionsdüse mit einem 3-D Druckverfahren oder mittels Spritzguss hergestellt.

Der Extrusionsdüsenkörper ist bevorzugt hergestellt aus Metallen oder temperaturstabilen Kunststoffen, bevorzugt Eisen, Chrom, Kobalt, Nickel, Titan, Mangan, Aluminium, Chrom, Niob, Wolfram, Molybdän, Vanadium und/oder Gemische oder Legierungen davon.

Die Extrusionsdüsenöffnungen weisen bevorzugt eine Fläche innerhalb eines gedachten Rechtecks mit den Kantenlängen 5 mm bis 50 mm und 2 mm bis 20 mm, bevorzugt innerhalb eines gedachten Rechtecks mit den Kantenlängen 10 mm bis 30 mm und 5 mm bis 15 mm auf. Die genaue Geometrie der Düsenöffnung ist dabei variabel und hängt von der späteren Form der extrudierten Profildichtung ab.

Die Düsenöffnung weist bevorzugt einen maximalen Durchmesser (a) von 0,1 cm bis 3 cm, bevorzugt 0,5 cm bis 2 cm auf.

Die Düsenöffnung weist bevorzugt eine maximale Höhe im Querschnitt von 0,1 cm bis 3 cm, bevorzugt 0,5 cm bis 2 cm auf.

Das erfindungsgemäße Verfahren zur Extrusion eines Profilstrangs auf ein Substrat umfasst das Aufbringen eines Polymers mittels der erfindungsgemäßen Extrusionsdüse auf einem Substrat. Das Polymer muss pastös und extrudierbar sein. Als Extrusionsmaterial wird zweckmäßigerweise ein thermoplastisches Polymer, bevorzugt Polyurethan (PU), eingesetzt.

Erfindungsgemäß wird die erfindungsgemäße Extrusionsdüse zur Extrusion eines Profilstranges auf Glas, Polymeren oder Metallen, insbesondere auf einer Fahrzeugverglasung, Bauglasverglasung oder Verbundglas eingesetzt.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer Prinzipskizze:
Fig. 1 Ansicht einer Extrusionsdüse,
Fig. 2 Seitenansicht eines Extrusionsdüsenkopfes,
Fig. 3 Ansicht auf die Oberfläche des Extrusionsdüsenkopfes,
Fig. 4 Ansicht in Vorschubrichtung des Extrusionsdüsenkopfes,
Fig. 5 Ansicht auf die Einbuchtungen des Extrusionsdüsenkopfes,
Fig. 6 Verbindungselement,
   und
Fig. 7a-d Schematische Extrusion zwischen zwei Glasscheiben.

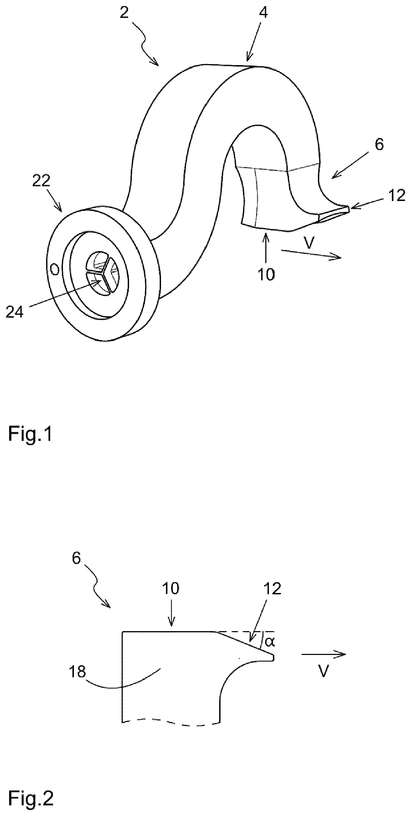

Fig. 1 zeigt eine Ausgestaltung einer Extrusionsdüse 2. Die Extrusionsdüse 2 weist einen Extrusionsdüsenkörper 4 auf, welcher auf einer ersten Seite mit einem Verbindungselement 22 verbunden ist und auf einer zweiten Seite einen Extrusionsdüsenkopf 6 aufweist.

Der Extrusionsdüsenkörper 4 weist eine gekröpfte Form auf. Der Extrusionsdüsenkörper 4 kann einen runden, rechteckigen oder quadratischen Querschnitt aufweisen. Die genaue Form ist insbesondere an das zu beschichtende Material, insbesondere den zu beschichtenden oder zu befüllenden Spalt, angepasst.

Das Verbindungselement 22 ist auf den an der Extrusionsvorrichtung vorhandenen Anschluss angepasst. Dieses Verbindungselement 22 ist mit der Extrusionsdüse 2 verbindbar oder fest verbunden.

Der Extrusionsdüsenkopf 6 weist eine Oberseite 10 auf, auf der die Extrusionsdüsenöffnungen 8 angeordnet sind. Vom Extrusionsdüsenkopf 6 erstreckt sich in Vorschubrichtung V ein Verteilerelement 12.

Das Verteilerelement 12 bildet einen Vorsprung oder Bug am Extrusionsdüsenkopf. Dabei ist eine Oberfläche des Verteilerelements zu einer Oberfläche des Extrusionsdüsenkopfes um einen Winkel α verkippt. Der Winkel α ist in der in Fig. 2 dargestellten Ebene definiert. Im gezeigten Beispiel beträgt der Winkel α 20°.

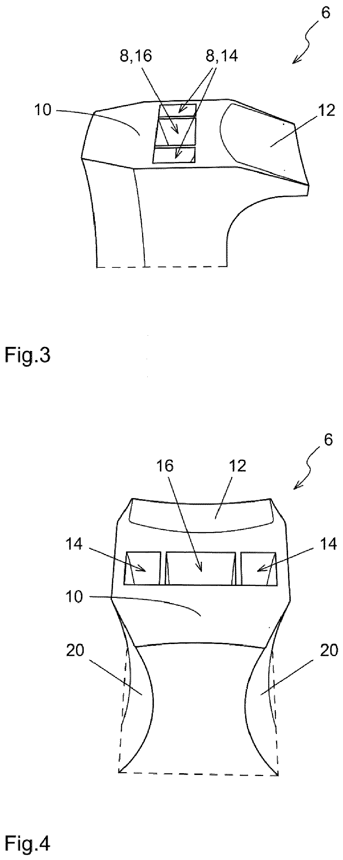

Fig. 3 zeigt eine Ansicht auf die Oberseite 10 des Extrusionsdüsenkopfes 6. Auf der Oberfläche 10 sind drei Extrusionsdüsenöffnungen 8 in einer Reihe senkrecht zur Vorschubrichtung V angeordnet. Die Extrusionsdüsenöffnungen 8 weisen eine rechteckige Öffnungsfläche auf. Die mittlere Extrusionsdüsenöffnung 16 ist größer, insbesondere im Verhältnis 2:1 größer, als die beiden äußeren Extrusionsdüsenöffnungen 14. Die Fläche der Oberfläche 10 ist im mittleren Bereich des Extrusionsdüsenkopfes 6 von parallelen Kanten begrenzt. Das Verteilerelement 12 erstreckt sich mit im Wesentlichen gleicher Breite davon nach vorne. Auf der vom Verteilerelement 12 abgewandten Seite wird die Oberfläche schmaler.

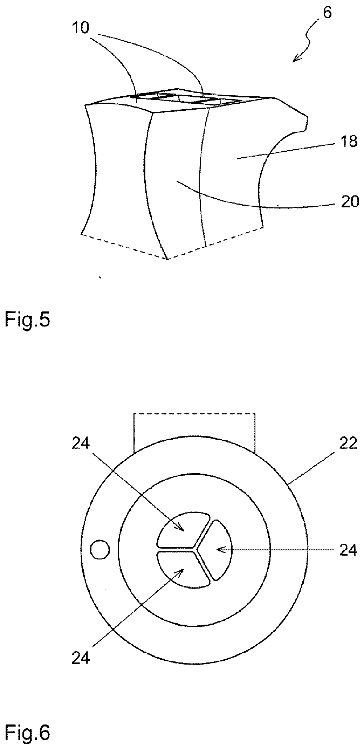

Wie in Fig. 4 und 5 gezeigt, befinden sich rückwärtig zu den Extrusionsdüsenöffnungen 8 an den Seitenflächen 18 Einbuchtungen 20, welche sich bis zur Oberseite 10 des Extrusionsdüsenkopfes 6 erstrecken. Diese Einbuchtungen 20 dienen als Materialreservoir. In Fig. 5 ist weiterhin gezeigt, dass die Oberfläche im Beispiel konvex ausgeführt ist, was die in Fig. 2 dargestellte gekrümmte Übergangskante zwischen Oberfläche des Extrusionsdüsenkopfes und Oberfläche des Verteilerelements bewirkt.

Fig. 6 zeigt eine Ansicht des Verbindungselements 22. Dieses weist im zentralen Bereich drei Kanäle 24 auf, welche sich durch den Extrusionsdüsenkörper zu den Extrusionsdüsenöffnungen erstrecken. Im Bereich des Verbindungselement 22 bzw. auf der ersten Seite des Extrusionsdüsenkörpers 4 sind die Kanäle als Kreissegmente 24 ausgebildet.

Im Verlauf des Extrusionsdüsenkörpers 4 zum Extrusionsdüsenkopf 6 ändert sich der Querschnitt der Kanäle 24 zur Form der Extrusionsdüsenöffnungen 8 hin.

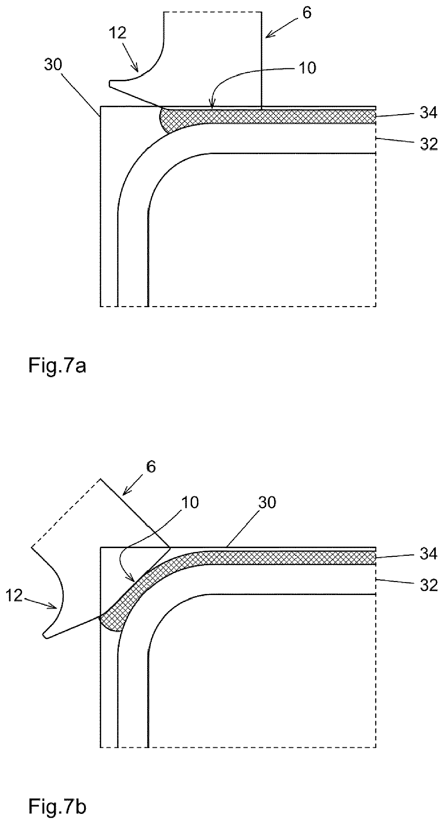

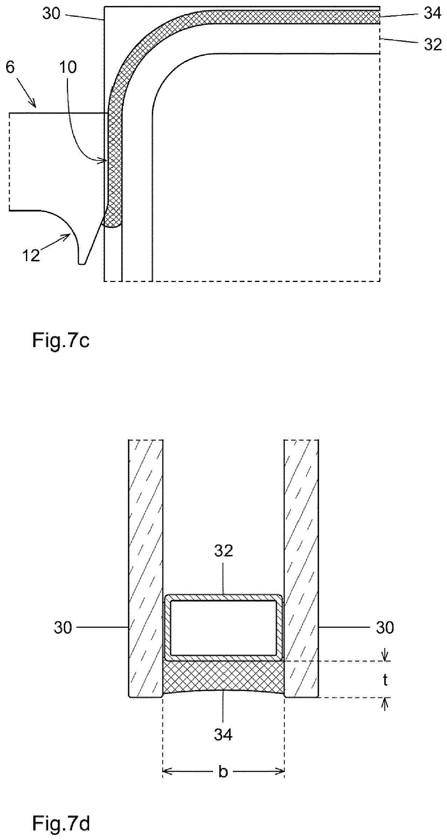

Fig. 7 zeigt das Aufbringen eines Profilstranges zwischen zwei Glasscheiben 30. Die Glasscheiben 30 sind mit einem Abstandshalter 32, wie in Fig. 7d gezeigt, in einem vorgegebenen Abstand zueinander angeordnet, so dass sich ein Spalt mit einer vorgegebenen Breite b ausbildet. Weiterhin ist der Abstandshalter in einer vorgegebenen Tiefe t von einer Kante der Glasscheiben 30 angeordnet. Der Extrusionsdüsenkopf 6 kann zwischen die beiden Glasscheiben 30 eingebracht werden. Die Breite des Extrusionsdüsenkopfes 6 ist an die Spaltbreite b angepasst. Die Extrusionsdüsenöffnungen 8 sind zum Abstandshalter 32 hingerichtet. Das Verteilerelement 12 ist in Vorschubrichtung V der Extrusionsdüse 2 entlang des Spaltes vor dem Extrusionsdüsenkopf 6 angeordnet. Aus den Extrusionsdüsenöffnungen 8 tritt das Extrusionsmaterial aus, wobei zweckmäßigerweise aus der oder den mittleren Extrusionsdüsenöffnungen 16 mehr Extrusionsmaterial austritt als aus den äußeren Extrusionsdüsenöffnungen 14. Wie in den Fig. 7a bis 7c gezeigt wird die Extrusionsdüse um die Ecke geführt. Dabei wird ein Teil des Extrusionsmaterials mit dem Verteilerelement 12 vor der Extrusionsdüse 2 vorhergeschoben und dann durch den geringer werdenden Abstand zwischen Oberfläche und Abstandshalter 32 auf die gewünschte Dicke gebracht. Gegebenenfalls überschüssiges Material kann in den Einbuchtungen 20 aufgenommen werden. Das so erhaltene Extrusionsprofil muss nach Beendigung des Extrusionsvorganges auch im Bereich der Ecken nicht manuell nachbearbeitet werden.

### Bezugszeichenliste

- 2: Extrusionsdüse
- 4: Extrusionsdüsenkörper
- 6: Extrusionsdüsenkopf
- 8: Extrusionsdüsenöffnungen
- 10: Oberseite
- 12: Verteilerelement
- 14: äußere Extrusionsdüsenöffnung
- 16: mittlere Extrusionsdüsenöffnung
- 18: Seitenfläche
- 20: Einbuchtung
- 22: Verbindungselement
- 24: Kanal

- 30: Glasscheibe
- 32: Abstandshalter
- 34: Profilstrang

- α: Winkel

- V: Vorschubrichtung

## Patentansprüche

1. Extrusionsdüse (2) zur Ausbringung eines Profilstranges, umfassend:
a. Einen Extrusionsdüsenkörper (4) mit einem Extrusionsdüsenkopf (6), wobei der Extrusionsdüsenkörper (4) auf einer ersten Seite zum Verbinden mit einem Verbindungselement (22) ausgelegt ist und auf einer zweiten Seite den Extrusionsdüsenkopf (6) aufweist,
b. Zumindest zwei Extrusionsdüsenöffnungen (8, 14, 16), welche auf einer Oberseite (10) des Extrusionsdüsenkopfes (6) angeordnet sind, und
c. Ein Verteilerelement (12), welches am Extrusionsdüsenkopf (6) angeordnet ist.

2. Extrusionsdüse (2) nach Anspruch 1, wobei der Extrusionsdüsenkörper (4) eine gebogene oder gekröpfte Form aufweist.

3. Extrusionsdüse (2) nach Anspruch 1 oder 2, wobei die Extrusionsdüse (2) zumindest drei Extrusionsdüsenöffnungen (8, 14, 16) aufweist, wobei die Extrusionsdüsenöffnungen (8, 14, 16) insbesondere in einer Reihe angeordnet sind.

4. Extrusionsdüse (2) nach Anspruch 3, wobei ein Öffnungsquerschnitt der äußeren Extrusionsdüsenöffnungen (14) kleiner ist als ein Öffnungsquerschnitt der dazwischenliegenden Extrusionsdüsenöffnungen (16).

5. Extrusionsdüse (2) nach einem der vorhergehenden Ansprüche, wobei das Verteilerelement (22) am Extrusionsdüsenkopf (6) in einer Vorschubrichtung (V) angeordnet ist und sich in der Vorschubrichtung (V) verjüngt.

6. Extrusionsdüse (2) nach einem der vorhergehenden Ansprüche, wobei der Extrusionsdüsenkopf (6) auf zwei sich gegenüberliegenden Seiten eine Einbuchtung (20) aufweist, welche insbesondere in einem in Vorschubrichtung (V) hinteren Bereich des Extrusionsdüsenkopfes (6) angeordnet sind.

7. Extrusionsdüse (2) nach einem der vorhergehenden Ansprüche, wobei eine Oberfläche der Oberseite (10) des Extrusionsdüsenkopfes (6) eben, konkav gewölbt, konvex gewölbt oder dachförmig ausgebildet ist.

8. Extrusionsdüse (2) nach einem der vorhergehenden Ansprüche, wobei der Extrusionsdüsenkörper (6) eine mit der Anzahl der Extrusionsdüsenöffnungen (8, 14, 16) identische Anzahl von separaten Kanälen (24) aufweist, wobei insbesondere die Kanäle (24) auf der ersten Seite des Extrusionsdüsenkörper (4) den Querschnitt eines Kreissegments aufweisen und sich der Querschnitt entlang des Extrusionsdüsenkörpers (4) zur Querschnittsfläche der Extrusionsdüsenöffnung (4) ändert.

9. Extrusionsdüse (2) nach einem der vorhergehenden Ansprüche, wobei die Extrusionsdüse (2) mit einem Spritzguss oder 3-D Druckverfahren hergestellt ist.

10. Verfahren zur kontinuierlichen Extrusion eines Profilstrangs auf ein Substrat, wobei ein Polymer über die Extrusionsdüse (2) nach einem der Ansprüche 1 bis 9 auf einem Substrat aufgebracht wird.

11. Verwendung der Extrusionsdüse (2) nach einem der Ansprüche 1 bis 9 zur Extrusion eines Profilstranges auf Glas, Polymeren oder Metallen, insbesondere auf eine Fahrzeugverglasung, Bauglasverglasung oder Verbundglas.
